# EUROPÄISCHE PATENTANMELDUNG

(11) **EP 4 287 384 A1**
(43) Veröffentlichungstag der Anmeldung: **06.12.2023**
(21) Anmeldenummer: 22176344.4
(22) Anmeldetag: 31.05.2022
(51) Int. Cl.: H01M 50/503, H01M 50/505, B23K 20/04

(54) **VERBINDER AUS ZWEI METALLISCHEN MATERIALIEN**

(71) Anmelder: Heraeus Deutschland GmbH & Co. KG, 63450 Hanau (DE)
(72) Erfinder: Happ, Thilo, 63450 Hanau (DE); Pietsch, Christian, 63450 Hanau (DE)
(74) Vertreter: Heraeus IP

(57) **Zusammenfassung**

Die Erfindung betrifft einen bandförmigen Verbinder aus Metall, wobei die Länge und die Breite des bandförmigen Verbinders größer sind als die Dicke des bandförmigen Verbinders, der bandförmige Verbinder aufweisend ein erstes metallisches Material (41) und ein zweites metallisches Material (42), wobei das erste Material (41) und das zweite Material (42) unmittelbar und formschlüssig über eine Verbindungsfläche (50) miteinander verbunden und aneinander gefügt sind, wobei die Verbindungsfläche (50) zumindest bereichsweise einander gegenüberliegende, formschlüssige und ineinandergreifende Verzahnungen (43, 52) des ersten Materials (41) und des zweiten Materials (42) entlang der Breite des bandförmigen Verbinders aufweist.

Die Erfindung betrifft auch die Verwendung eines solchen bandförmigen Verbinders zum Verbinden von galvanischen Zellen, ein galvanisches Element mit mehreren galvanischen Zellen, wobei die galvanischen Zellen mit wenigstens einem solchen bandförmigen Verbinder verbunden und elektrisch kontaktiert sind, und ein Verfahren zur Herstellung eines Verbindungs-Bands und zur Herstellung von bandförmigen Verbindern aus dem Verbindungs-Band.

## Beschreibung

Die Erfindung betrifft einen bandförmigen Verbinder aus Metall, bei dem zwei unterschiedliche metallische Materialien aneinandergefügt sind. Derartige bandförmige Verbinder sind insbesondere zum elektrischen Verbinden von galvanischen Zellen, also von Batteriezellen oder Akkumulatorenzellen, geeignet.

Die Erfindung betrifft auch ein Verfahren zur Herstellung eines Verbindungs-Bands aus zwei unterschiedlichen metallischen Materialien aus Bändern, die aus den metallischen Materialien bestehen, wobei die metallischen Materialien der Bänder durch Walzplattieren fest miteinander verbunden werden, sowie ein Verfahren zur Herstellung eines bandförmigen Verbinders aus solchen Verbindungs-Bändern.

Die Erfindung betrifft auch die Verwendung von bandförmigen Verbindern aus Metall zur elektrischen Kontaktierung zumindest zweier Batterieelemente oder zumindest zweier galvanischen Elemente und ein galvanisches Element mit mehreren galvanischen Zellen, die mit wenigstens einem solchen bandförmigen Verbinder miteinander verbunden und elektrisch kontaktiert sind.

Bandförmige Verbinder aus zwei unterschiedlichen metallischen Materialien werden insbesondere als Verbinder für Batterieelemente oder galvanische Elemente, insbesondere von galvanischen Zellen von Batterien beziehungsweise Akkumulatoren eingesetzt. Derzeit werden Lithium-Ionen-Batterien (beziehungsweise Lithium-Ionen-Akkumulatoren) und Nickel-Metallhydrid-Batterien (beziehungsweise Nickel-Metallhydrid-Akkumulatoren) in großen Stückzahlen produziert. Dabei werden zur Verschaltung und Verbindung der einzelnen Zellen der Batterien oder der Batterien miteinander solche bandförmigen Verbinder eingesetzt.

Die Verbindung zweier unterschiedlicher Metalle kann schwierig sein, wenn sich diese nicht einfach fügetechnisch verbinden lassen. Gerne werden hierzu Walzplattierverfahren verwendet, wobei die Metalle bei Massenproduktionen zunächst als Bänder vorliegen, die mit einer Walze durch Walzplattieren aneinandergefügt werden. Ein solches Verfahren ist beispielsweise aus der US 4,798,932 A1 bekannt.

Zur Herstellung von Bändern oder daraus hergestellter bandförmiger Verbinder zur Verbindung von Batterien oder deren Zellen können diese beispielsweise mit einem Kaltwalzplattierverfahren hergestellt werden, wie dies beispielsweise in der DE 10 2008 018 204 A1 beschrieben ist. Speziell die Anwendung dieser bandförmigen Verbinder als Verbinder für Batterieelemente erfordert eine beidseitige Sortenreinheit der unterschiedlichen Metalle und/oder Metalllegierungen.

Die WO 2011/106074 A1 schlägt zur Lösung dieser Probleme vor, eine Stärkung der Stabilität der Verbindung der beiden Materialien durch einen größeren Überlappungsbereich zu erreichen. Dazu sind die beiden aneinanderzufügenden Stellen zueinander passend geformt, so dass diese ineinandergelegt werden können und einander greifen. Auch die Druckschriften US 2012/0058360 A1, JP 2008-006 496 A, JP H09-323101 A, JP 2011-148164 A und

JP S59-141303 A versuchen mit einer Anpassung der Geometrie des Profils der Verbindungsfläche der beiden metallischen Materialien, eine Verbesserung der mechanischen Verbindung der beiden Enden beziehungsweise der beiden metallischen Materialien der bandförmigen Verbinder zu erzielen. Auch diese Profile müssen sorgfältig ineinandergelegt werden. In der WO 2015/043951 A1 wird ein Verfahren beschrieben, bei dem eine Verbindung durch Eintreiben einer Kante auf einem abgeschrägten Verbindungsprofil mit Hilfe von Walzplattieren erzeugt wird. Alle diese Varianten haben gemeinsam, dass entlang der Breite der bandförmigen Verbinder eine gleichbleibende Profilierung zur Verbindung in den Bändern erzeugt wird. Dadurch ist eine einfache Herstellung der Profilierung möglich und ein Aneinanderlegen der Bänder ist ohne aufwendige Ausrichtung der profilierten Oberflächen zueinander möglich.

Nachteilig ist bei allen Ausführungen zum Stand der Technik, dass sich die beiden aneinandergefügten Teile bei mechanischer Belastung noch immer voneinander lösen können. Grundsätzlich ist es wünschenswert, dass die Verbindung der beiden metallischen Materialien möglichst stabil ist.

Die Aufgabe der Erfindung besteht also darin, die Nachteile des Stands der Technik zu überwinden. Insbesondere sollen ein bandförmiger Verbinder aus zwei metallischen Materialien und ein Verfahren zur Herstellung eines solchen bandförmigen Verbinders beziehungsweise eines Vorprodukts davon, nämlich eines Verbindungs-Bands, gefunden werden, der beziehungsweise das sich möglichst kostengünstig realisieren lässt und für die Massenproduktion tauglich ist, so dass der bandförmige Verbinder eine möglichst mechanisch stabile Verbindung zwischen den zwei metallischen Materialien hat. Die Verbindung soll insbesondere bei einer Zugbelastung in Richtung der Länge des bandförmigen Verbinders ein Auftrennen der Verbindung der beiden metallischen Materialien an der Verbindungsfläche verhindern.

Die Aufgaben der Erfindung werden gelöst durch einen bandförmigen Verbinder nach Anspruch 1, durch die Verwendung eines solchen bandförmigen Verbinders zum Verbinden von galvanischen Zellen gemäß Anspruch 9, durch ein galvanisches Element mit mehreren galvanischen Zellen gemäß Anspruch 10, wobei die galvanischen Zellen mit wenigstens einem solchen bandförmigen Verbinder verbunden und elektrisch kontaktiert sind, sowie durch ein Verfahren zur Herstellung eines Verbindungs-Bands und zur Herstellung von bandförmigen Verbindern aus dem Verbindungs-Band gemäß den Ansprüchen 11 und 15. Bevorzugte Ausführungen sind in den Unteransprüchen 2 bis 8 und 12 bis 14 gezeigt.

Die Aufgaben der Erfindung werden gelöst durch einen bandförmigen Verbinder aus Metall, der bandförmige Verbinder aufweisend eine Länge, eine Breite und eine Dicke, wobei die Länge und die Breite des bandförmigen Verbinders größer sind als die Dicke des bandförmigen Verbinders, der bandförmige Verbinder aufweisend ein erstes metallisches Material und ein zweites metallisches Material, wobei das erste metallische Material und das zweite metallische Material unmittelbar und formschlüssig über eine Verbindungsfläche miteinander verbunden und aneinander gefügt sind, wobei die Verbindungsfläche zumindest bereichsweise einander gegenüberliegende, formschlüssige und ineinandergreifende Verzahnungen des ersten metallischen Materials und des zweiten metallischen Materials entlang der Breite des bandförmigen Verbinders aufweist.

Die Verbindungsfläche bildet eine gemeinsame Grenzfläche zwischen dem ersten metallischen Material und dem zweiten metallischen Material. Als solche ist die Verbindungsfläche sowohl ein Teilbereich der Oberfläche des ersten metallischen Materials als auch ein Teilbereich der Oberfläche des zweiten metallischen Materials des bandförmigen Verbinders.

Unter einer Verzahnung im Sinne der vorliegenden Erfindung ist eine Formgebung beziehungsweise eine Form des ersten metallischen Materials und des zweiten metallischen Materials zu verstehen, wobei durch die Formgebung mehrere Vorsprünge, wie beispielsweise Zacken, Zinken oder Keile, zur Herstellung einer Verbindung aus der Verbindungsfläche des jeweiligen metallischen Materials entlang der Breite des bandförmigen Verbinders vorstehen. Derartige Vorsprünge können dabei auch komplexere Formen aufweisen, wie beispielsweise Puzzle-Teil-Verbindungselemente oder Reißverschluss-Verbindungen. Die Vorsprünge können Hinterschneidungen aufweisen, die ein einfaches Lösen der Verzahnung durch ein Auseinanderziehen entlang der Achse der Länge des bandförmigen Verbinders beziehungsweise entlang der Ausrichtung der Verzahnung verhindert oder zumindest deutlich erschwert. Derartige Hinterschneidungen sind zur mechanischen Stabilisierung der Verbindung der beiden metallischen Materialien besonders bevorzugt.

Die Vorsprünge der Verzahnung sind immer makroskopisch zu verstehen und stellen keine Mikrostrukturierung auf atomarer Ebene dar, die einer Durchmischung von Atomen des ersten metallischen Materials mit Atomen des zweiten metallischen Materials an der Verbindungsfläche (Grenzfläche) entspricht, die beim Fügen des ersten metallischen Materials mit dem zweiten metallischen Material entsteht.

Unter einer gegenüberliegenden, formschlüssigen und ineinandergreifenden Verzahnung ist im Sinne der vorliegenden Erfindung eine Verzahnung zu verstehen, bei der die Form der Vorsprünge der Verzahnung des ersten metallischen Materials eine Negativform der Form der Vorsprünge der Verzahnung des zweiten metallischen Materials ist. Dadurch kommt es zu einem flächenbündigen Formschluss, der eine besonders stabile mechanische Verbindung der beiden metallischen Materialien bewirkt.

Dass die Verzahnung des ersten Materials mit dem zweiten Material entlang der Breite des bandförmigen Verbinders ausgerichtet ist, bedeutet, dass die Vorsprünge bezogen auf die Breite des bandförmigen Verbinders versetzt nebeneinander angeordnet sind. Die Vorsprünge können dabei direkt benachbart zueinander angeordnet sein oder auch in Richtung der Länge und/oder (in geringem Umfang) auch in Richtung der Dicke des bandförmigen Verbinders versetzt zueinander angeordnet sein. Es können theoretisch auch zusätzlich mehrere Vorsprünge bezogen auf die Länge des bandförmigen Verbinders hintereinander angeordnet sein.

Unter einem bandförmigen Verbinder ist ein Übergang zwischen zwei Materialien zu verstehen, wobei der Verbinder eine abgeflachte Struktur aufweist, also bandförmig ist.

Bevorzugt kann vorgesehen sein, dass ein erstes Ende in Form eines ersten Längen-Teilstücks des bandförmigen Verbinders aus dem ersten metallischen Material besteht oder zumindest im Wesentlichen (zu mindestens 90 Gew%, bevorzugt zu 100 Gew%) aus dem ersten metallischen Material besteht. Auch kann vorgesehen sein, dass ein zweites Ende in Form eines zweiten Längen-Teilstücks des bandförmigen Verbinders aus dem zweiten metallischen Material besteht oder zumindest im Wesentlichen (zu mindestens 90 Gew%, bevorzugt zu 100 Gew%) aus dem zweiten metallischen Material besteht.

Es kann vorgesehen sein, dass die Anzahl der Vorsprünge des ersten Materials und die Anzahl der Vorsprünge des zweiten Materials sich maximal um 1 unterscheidet. Hierdurch kann eine vollständige flächenbündige Verbindung sichergestellt werden.

Es kann vorgesehen sein, dass der bandförmige Verbinder ein bandförmiger elektrischer Verbinder, insbesondere ein bandförmiger elektrischer Verbinder für galvanische Zellen oder ein Batteriezellenverbinder oder ein Akkumulatorzellenverbinder ist.

Derartige Verbinder sind besonders gut mit den genannten Verbindungen zu realisieren.

Des Weiteren kann vorgesehen sein, dass die Verzahnungen derart strukturiert sind, dass bei einem Querschnitt durch den bandförmigen Verbinder und durch die Verzahnungen über die gesamte Breite des bandförmigen Verbinders in diesem Querschnitt ein mehrfach wechselndes Verhältnis der Menge des ersten metallischen Materials zu der Menge des zweiten metallischen Materials entlang der Breite des bandförmigen Verbinders über zumindest einen Teilbereich der Dicke des bandförmigen Verbinders vorhanden ist, bevorzugt ein periodisch wechselndes Verhältnis der Menge des ersten metallischen Materials zu der Menge des zweiten metallischen Materials entlang der Breite des bandförmigen Verbinders über zumindest einen Teilbereich der Dicke des bandförmigen Verbinders vorhanden ist.

Hierdurch wird eine möglichst intensive und vollständige Verzahnung des ersten metallischen Materials und des zweiten metallischen Materials gewährleistet.

Auch kann vorgesehen sein, dass die Verzahnung des ersten metallischen Materials eine Vielzahl von Vorsprüngen des ersten metallischen Materials und die Verzahnung des zweiten metallischen Materials eine Vielzahl von Vorsprüngen des zweiten metallischen Materials aufweist, wobei bevorzugt die Vorsprünge des ersten metallischen Materials in Zwischenräume zwischen den Vorsprüngen des zweiten metallischen Materials greifen, wobei besonders bevorzugt die Vorsprünge Zähne, Zinken, Keile und/oder Haken sind.

Hierdurch wird eine besonders stabile Verbindung durch die Verzahnungen erreicht.

Dabei kann vorgesehen sein, dass die Vorsprünge des ersten metallischen Materials und die Vorsprünge des zweiten metallischen Materials bezogen auf die Breite des bandförmigen Verbinders nebeneinander angeordnet sind oder bezogen auf die Breite des bandförmigen Verbinders in Richtung der Länge des bandförmigen Verbinders versetzt zueinander nebeneinander angeordnet sind.

Auch hierdurch wird eine weitere Stabilisierung der Verbindung und damit des bandförmigen Verbinders erreicht.

Ferner kann dabei vorgesehen sein, dass die Vorsprünge des ersten metallischen Materials und die Vorsprünge des zweiten metallischen Materials in Richtung der Dicke des bandförmigen Verbinders ausgerichtet sind oder die Vorsprünge des ersten metallischen Materials und die Vorsprünge des zweiten metallischen Materials eine Ausrichtung mit einem Anteil in Richtung der Dicke des bandförmigen Verbinders aufweisen.

Hierdurch lässt sich ein stabiler und leicht miteinander zu verzahnender Reißverschluss als Verbindung bilden.

Des Weiteren kann vorgesehen sein, dass die Vorsprünge des ersten metallischen Materials und die Vorsprünge des zweiten metallischen Materials Hinterschneidungen aufweisen, bevorzugt bezogen auf die Richtung der Länge des bandförmigen Verbinders Hinterschneidungen aufweisen.

Dadurch wird die Verbindung nur sehr schwer durch einen Zug an den Enden des bandförmigen Verbinders zu trennen. Eigene Versuche zeigen, dass bei einer geeigneten

Ausformung der Verzahnungen mit Hinterschneidungen die bandförmigen Verbinder eher außerhalb der Verbindungszone reißen als innerhalb der Verbindungszone.

Auch kann vorgesehen sein, dass die Vorsprünge des ersten metallischen Materials und die Vorsprünge des zweiten metallischen Materials nach Art eines Reißverschlusses ineinandergreifen.

Derartige Reißverschlussverbindungen sind besonders stabil.

Gemäß einer Weiterbildung kann vorgesehen sein, dass die Vorsprünge des ersten metallischen Materials und die Vorsprünge des zweiten metallischen Materials Kavitäten bilden, die jeweils Hinterschneidungen aufweisen, wobei die Vorsprünge des ersten metallischen Materials in die Kavitäten und Hinterschneidungen der Vorsprünge des zweiten metallischen Materials greifen und die Vorsprünge des zweiten metallischen Materials in die Kavitäten und Hinterschneidungen der Vorsprünge des ersten metallischen Materials greifen.

Dadurch wird die Verbindung nur sehr schwer durch einen Zug an den Enden des bandförmigen Verbinders zu trennen. Eigene Versuche zeigen, dass bei einer geeigneten Ausformung der Verzahnungen mit Hinterschneidungen die bandförmigen Verbinder eher außerhalb der Verbindungszone reißen als innerhalb der Verbindungszone.

Ferner kann vorgesehen sein, dass die Vorsprünge des ersten metallischen Materials eine Reihe bilden und die Vorsprünge des zweiten metallischen Materials eine Reihe bilden, bevorzugt die Vorsprünge des ersten metallischen Materials eine gerade Reihe bilden und die Vorsprünge des zweiten metallischen Materials eine gerade Reihe bilden.

Hierdurch wird die Fertigung der Verzahnung vereinfacht.

Es kann vorgesehen sein, dass die Verbindungsfläche über die gesamte Breite des bandförmigen Verbinders eine gegen die Dicke des bandförmigen Verbinders in Richtung der Länge des bandförmigen Verbinders geneigte Oberfläche aufweist, wobei vorzugsweise die Verzahnung des ersten metallischen Materials und die Verzahnung des zweiten metallischen Materials aus der geneigten Oberfläche vorstehen.

Hierdurch wird die Verbindungsfläche vergrößert und das Fügen des ersten metallischen Materials mit dem zweiten metallischen Material vereinfacht.

Auch kann vorgesehen sein, dass das erste metallische Material aus der Gruppe ausgewählt ist, die aus Kupfer, Kupfer-Basislegierung, Eisen, Eisen-Basislegierung und Stahl besteht, und das zweite metallische Material Aluminium oder eine Aluminium-Basislegierung ist, wobei bevorzugt das erste metallische Material Kupfer oder eine Kupfer-Basislegierung ist.

Unter einer Kupfer-Basislegierung ist eine metallische Legierung mit zumindest 50 Atom% Kupfer zu verstehen. Unter einer Aluminium-Basislegierung ist eine metallische Legierung mit zumindest 50 Atom% Aluminium zu verstehen. Unter einer Eisen-Basislegierung ist eine metallische Legierung mit zumindest 50 Atom% Eisen zu verstehen.

Der Stahl hat bevorzugt zumindest 50 Gew% Eisen.

Diese Materialien lassen sich gut durch Verzahnen miteinander fügen. Zudem sind diese Materialien gut zur Herstellung von bandförmigen Verbindern, insbesondere zur Herstellung von Batteriezellenverbindern beziehungsweise zur Verbindung von galvanischen Zellen geeignet. Bevorzugt kann auch vorgesehen sein, dass das erste metallische Material und/oder das zweite metallische Material bei Raumtemperatur eine Bruchdehnung von zumindest 10% aufweist. Ferner kann vorgesehen sein, dass das erste metallische Material eine geringere Dehngrenze bei Raumtemperatur aufweist als das zweite metallische Material.

Die Bruchdehnung und die Dehngrenze sollen vorzugsweise mit dem Prüfverfahren für Zugversuche von metallischen Werkstoffen bei Raumtemperatur gemäß ISO 6892-1:2009 (Deutsche Fassung EN ISO 6892-1:2009) bestimmt werden. Als Probenart ist hier die Erzeugnisform eines Feinblechs oder Grobblechs mit rechteckigem Querschnitt relevant. Die Regelung der Dehngeschwindigkeit, die auf dem Signal des Dehnungsaufnehmers basiert, wird vorliegend bei der Messung bevorzugt.

Die Bruchdehnung ist also als Bruchdehnung gemäß ISO 6892-1:2009 (Deutsche Fassung EN ISO 6892-1:2009) zu verstehen. Die Dehngrenze ist also als Dehngrenze gemäß Kapitel 13 ISO 6892-1:2009 (Deutsche Fassung EN ISO 6892-1:2009) zu verstehen.

Durch die unterschiedliche Bruchdehnung bei Raumtemperatur kann die Verzahnung in dem ersten metallischen Material genutzt werden, um durch Walzen und Fließen des zweiten metallischen Materials eine passende Verzahnung in dem zweiten metallischen Material zu erzeugen und diese auf besonders einfache und kostengünstige Weise miteinander zu fügen. Gemäß einer weiteren bevorzugten Weiterbildung kann vorgesehen sein, dass das erste metallische Material und das zweite metallische Material durch Walzen und/oder Pressen miteinander gefügt und verbunden sind.

Hierdurch kann eine flächenbündige Verbindung sichergestellt werden und die Herstellung ist kostengünstig und unaufwendig realisierbar.

Es kann auch vorgesehen sein, dass das erste metallische Material einen ersten Längen-Teilbereich der Länge des bandförmigen Verbinders bildet und das zweite metallische Material einen zweiten Längen-Teilbereich der Länge des bandförmigen Verbinders bildet.

Hierdurch wird klargestellt, dass der bandförmige Verbinder einen Materialübergang zwischen dem ersten metallischen Material und dem zweiten metallischen Material bereitstellt.

Des Weiteren kann vorgesehen sein, dass an dem vom zweiten metallischen Material abgewandten Ende des ersten metallischen Materials ein bandförmiges Element aus dem ersten metallischen Material oder aus einem Material, das aus der Gruppe ausgewählt ist, die aus Kupfer, Kupfer-Basislegierung, Eisen, Eisen-Basislegierung und Stahl besteht, befestigt ist, bevorzugt angeschweißt oder angelötet ist.

Hierdurch wird der bandförmige Verbinder gut und unmittelbar als Batteriezellenverbinder oder als Verbinder für galvanische Zellen einsetzbar.

Die der vorliegenden Erfindung zugrundeliegenden Aufgaben werden auch gelöst durch eine Verwendung eines vorgenannten bandförmigen Verbinders zum Verbinden von galvanischen Zellen, insbesondere von Batteriezellen oder Akkumulatorzellen.

Des Weiteren werden die der vorliegenden Erfindung zugrundeliegenden Aufgaben auch gelöst durch ein galvanisches Element mit mehreren galvanischen Zellen, wobei die galvanischen Zellen mit wenigstens einem vorgenannten bandförmigen Verbinder verbunden und elektrisch kontaktiert sind.

Das galvanische Element profitiert dann von den Vorteilen des bandförmigen Verbinders.

Die der vorliegenden Erfindung zugrundeliegenden Aufgaben werden des Weiteren gelöst durch Verfahren zur Herstellung eines Verbindungs-Bands aus zwei metallischen Materialien, wobei das Verbindungs-Band zur Herstellung bandförmiger Verbinder geeignet und vorgesehen ist und wobei das Verfahren durch die folgenden, chronologisch aufeinander folgenden Schritte gekennzeichnet ist:
A) Bereitstellen eines ersten Bands aus einem ersten metallischen Material und eines zweiten Bands aus einem anderen, zweiten metallischen Material, wobei das erste Band und das zweite Band zumindest vier Kanten, zwei zueinander parallele Flächen und einen zumindest näherungsweise rechteckigen Querschnitt aufweisen,
B) Herstellen einer Verzahnung auf einer Seite des zweiten Bands ausgehend von einer Kante des zweiten Bands oder ausgehend von zwei Kanten des zweiten Bands in zumindest eine der zueinander parallelen Flächen hinein, wobei die Verzahnung über die gesamte zu verbindende Länge des zweiten Bands verläuft,
C) Positionieren des verzahnten zweiten Bands und des ersten Bands zueinander, wobei das erste Band über die Verzahnung des zweiten Bands an das verzahnte zweite Band angelegt wird, so dass das erste Band das verzahnte zweite Band im Bereich der Verzahnung überlappt und das verzahnte zweite Band und das erste Band ansonsten voneinander abstehen, und
D) Verbinden des verzahnten zweiten Bands mit dem ersten Band durch Walzplattieren der aneinander positionierten Bänder, nämlich des ersten Bands und des zweiten Bands, wobei durch das Walzplattieren ein zusammenhängendes Verbindungs-Band mit zwei parallelen Flächen erzeugt wird.

Dabei kann vorgesehen sein, dass das Verbinden des verzahnten zweiten Bands mit dem ersten Band durch Walzplattieren in Schritt D) bei einer Verarbeitungstemperatur erfolgt und das erste metallische Material und das zweite metallische Material so gewählt sind, dass die Bruchdehnung des ersten metallischen Materials bei der Verarbeitungstemperatur kleiner ist als die Bruchdehnung des zweiten metallischen Materials.

Auch kann vorgesehen sein, dass das Verbinden des verzahnten zweiten Bands mit dem ersten Band durch Walzplattieren in Schritt D) bei einer Verarbeitungstemperatur erfolgt und das erste metallische Material und das zweite metallische Material so gewählt sind, dass die Dehngrenze des ersten metallischen Materials bei der Verarbeitungstemperatur kleiner ist als die Dehngrenze des zweiten metallischen Materials.

Die Verarbeitungstemperatur kann in beiden Fällen Raumtemperatur sein.

Hierdurch wird sichergestellt, dass die Verzahnung des verzahnten zweiten Bands erhalten bleibt und durch das Walzplattieren eine Verzahnung im ersten Band erzeugt wird.

Des Weiteren kann vorgesehen sein, dass das das Herstellen der Verzahnung in dem zweiten Band mit einer Zerspanungstechnik und/oder durch Prägen erfolgt, bevorzugt durch Fräsen und/oder Prägen.

Auf diese Weise kann die Verzahnung auf einfache und kostengünstige Weise im zweiten Band erzeugt werden.

Ferner kann vorgesehen sein, dass das das erste Material aus der Gruppe ausgewählt ist, die aus Kupfer, Kupfer-Basislegierung, Eisen, Eisen-Basislegierung und Stahl besteht, und das zweite Material Aluminium oder eine Aluminium-Basislegierung ist, wobei bevorzugt das erste Material Kupfer oder eine Kupfer-Basislegierung ist.

Diese Materialien lassen sich gut durch Verzahnen miteinander fügen. Zudem sind diese Materialien gut zur Herstellung von bandförmigen Verbindern, insbesondere zur Herstellung von Batteriezellenverbindern beziehungsweise zur Verbindung von galvanischen Zellen geeignet. Es kann auch vorgesehen sein, dass das beim Verbinden in Schritt D) das erste metallische Material in die Verzahnung des zweiten Bands fließt und dabei eine formschlüssige und ineinandergreifende Verzahnung des ersten Materials mit dem zweiten Material entlang des Verbindungs-Bands bildet.

Auf diese Weise werden auf einfache und kostengünstige Weise ineinandergreifende Verzahnungen erzeugt, wobei die Verzahnungen flächenbündig ineinander greifen.

Bevorzugt kann auch vorgesehen sein, dass das beim Verbinden des verzahnten zweiten Bands und des ersten Bands durch Walzplattieren in Schritt D) das erste Band umgeformt wird oder das verzahnte zweite Band und das erste Band umgeformt werden, wobei vorzugsweise die Höhe des erzeugten Verbindungs-Bands geringer ist als die Höhe des ersten Bands und die Höhe des zweiten Bands.

Hierdurch wird eine besonders stabile Verbindung auf kostengünstige und schnelle Art und Weise realisiert.

Ferner kann vorgesehen sein, dass das bei der Umformung Wärme zugeführt wird und die Höhe des erzeugten Verbindungs-Bands zumindest um 20% geringer ist als die Höhe des ersten Bands und des zweiten Bands.

Hierdurch wird die Verbindung stabilisiert.

Des Weiteren kann vorgesehen sein, dass das die Höhe des ersten Bands und die Höhe des zweiten Bands mindestens 0,5 mm und maximal 5 mm betragen und nach dem Walzplattieren das erzeugte Verbindungs-Band eine Höhe von mindestens 0,1 mm bis maximal 2 mm aufweist, wobei vorzugsweise die Höhe des erzeugten Verbindungs-Bands geringer ist als die Höhe des ersten Bands und als die Höhe des zweiten Bands.

Mit diesen Parametern lassen sich die Bänder leicht prozessieren und so ein kostengünstiges Verbindungs-Band herstellen.

Auch kann vorgesehen sein, dass das das erste Band und das zweite Band eine Breite von mindestens 10 mm und maximal 100 mm aufweisen.

Mit diesen Parametern lassen sich die Bänder leicht prozessieren und so ein kostengünstiges Verbindungs-Band herstellen.

Bevorzugt kann vorgesehen sein, dass das beim Herstellen der Verzahnung in Schritt B) das zweite Band zunächst als nicht profiliertes zweites Band von einer Rolle abgespult wird, die Verzahnung durch ein subtraktives Verfahren und/oder durch Prägen erzeugt wird, bevorzugt mit einer Zerspanungstechnik oder einer Frästechnik oder durch Prägen erzeugt wird, und das verzahnte zweite Band anschließend wieder zu einer Rolle aufgewickelt wird.

Hierdurch wird die Herstellung des Verbindungs-Bands weiter vereinfacht und es kann auch ein besonders langes Verbindungs-Band zur Herstellung besonders vieler bandförmiger Verbinder erzeugt werden.

Des Weiteren kann auch vorgesehen sein, dass das beim Herstellen der Verzahnung in Schritt B) auch ein Herstellen einer Verzahnung auf einer Seite des ersten Bands ausgehend von einer Kante des ersten Bands oder ausgehend von zwei Kanten des ersten Bands in zumindest eine der zueinander parallelen Flächen hinein erfolgt, wobei die Verzahnung über die gesamte zu verbindende Länge des ersten Bands verläuft, und in Schritt C) ein Positionieren des verzahnten ersten Bands und des verzahnten zweiten Bands derart zueinander erfolgt, dass die Verzahnung des ersten Bands und die Verzahnung des zweiten Bands aneinander angelegt werden.

Dieses Verfahren kann vorteilhaft sein, wenn die verwendeten metallischen Materialien ähnliche Bruchdehnungen aufweisen. Zudem kann so insbesondere bei komplexeren Verzahnungen verhindert werden, dass Gaseinschlüsse in der Verbindung zwischen den metallischen Materialien entstehen.

Die der vorliegenden Erfindung zugrundeliegenden Aufgaben werden ferner gelöst durch ein Verfahren zur Herstellung eines bandförmigen Verbinders aus einem Verbindungs-Band aus Metall, das mit einem vorgenannten Verfahren hergestellt wird, wobei das Verbindungs-Band senkrecht zu einer Längsachse des Verbindungs-Bands in Streifen geschnitten oder gestanzt wird.

Hierdurch wird das Verfahren komplettiert.

Dabei kann vorgesehen sein, dass mit dem Verfahren ein zuvor genannter erfindungsgemäßer bandförmiger Verbinder hergestellt wird.

Mit einer bevorzugten Weiterentwicklung der erfindungsgemäßen Verfahren wird vorgeschlagen, dass jedes Band aus nur aus einem Metall oder einer metallischen Legierung besteht, wobei bevorzugt zwei erste Bänder aus dem gleichen Metall oder der gleichen metallischen Legierung bestehen und das zweite Band dazwischen angeordnet wird oder umgekehrt.

Hierdurch kann das Verfahren vereinfacht werden, da die Bänder auch in Längsrichtung gegeneinander verschoben angeordnet werden können, ohne dass dadurch die falschen Bereiche miteinander verbunden würden.

Besonders bevorzugt wird vorgeschlagen, dass die metallischen Materialien, aus denen die Bänder bestehen, ausgewählt werden aus Gruppe, die aus Kupfer, Aluminium, Aluminiumbasislegierungen und Kupferbasislegierungen bestehen.

Diese Materialien sind für Batterieverbinder besonders gut geeignet und die daraus erzeugten Streifen daher wirtschaftlich besonders gut verwertbar.

Gemäß einer Weiterentwicklung der erfindungsgemäßen Verfahren kann vorgesehen sein, dass beim Verbinden der Bänder miteinander durch Walzplattieren die Bänder umgeformt werden, wobei die Höhe des erzeugten dritten Bands geringer ist als die Höhe der ersten Bänder und des zweiten Bands.

Die Höhe eines Bands (die auch als die Dicke des Bands bezeichnet werden kann) entspricht dem Abstand der beiden parallelen Flächen des nicht profilierten Bands. Durch die Umformung wird eine stabile Verbindung der unterschiedlichen Materialien der Bänder erreicht.

Bei dieser Weiterentwicklung kann ferner vorgesehen sein, dass bei der Umformung den Bändern Wärme zugeführt wird und die Höhe des erzeugten dritten Bands zumindest um 20% geringer ist als die Höhe der drei Ausgangsbänder.

Diese geringe Umformung kann bei der Zuführung von Wärmeenergie bereits ausreichen, um eine stabile Verbindung der Materialien zu erreichen. Die Wärme kann beispielsweise mit Hilfe eines Stroms, Induktiv oder über beheizten Walzplattieren zugeführt werden.

Alternativ dazu kann vorgesehen sein, dass bei der Umformung den Bändern keine Wärme zugeführt wird und die Höhe des erzeugten dritten Bands zumindest um 40% geringer ist als die Höhe der drei Ausgangsbänder.

Dieser Grad der Umformung ist notwendig, wenn keine Wärme zugeführt wird, um die gewünschte stabile Verbindung zwischen den metallischen Materialien zu erreichen.

Um ein für die Massenfertigung besonders geeignetes Verfahren bereitzustellen kann bei allen erfindungsgemäßen Verfahren bevorzugt vorgesehen sein, dass beim Verzahnen der beiden Bänder oder des ersten Bands zunächst ein nicht gezahntes Band von einer Rolle abgespult wird, die Verzahnung durch ein subtraktives Verfahren erzeugt wird, bevorzugt mit einer Zerspanungstechnik oder einer Frästechnik erzeugt wird, und das gezahnte Band anschließend wieder zu einer Rolle aufgewickelt wird.

Die Verwendung von aufgespulten Rollen ermöglicht es, große Mengen der Streifen mit kompakten Anlagen verarbeiten zu können.

Um eine besonders stabile Verbindung herzustellen, kann erfindungsgemäß vorgesehen sein, dass beim Verbinden der Bänder miteinander ein Walzplattierungsverfahren angewendet wird. Walzplattierungsverfahren sind zur Umsetzung des erfindungsgemäßen Verfahrens besonders vorteilhaft.

Für die Massenproduktion der Streifen kann ebenfalls bevorzugt vorgesehen sein, dass beim Positionieren der Bänder zueinander die Bänder von jeweils einer Rolle abgespult werden, anschließend die Bänder durch Umlenkwalzen vor einem Walzspalt in der gewünschten Art und Weise zueinander positioniert werden, anschließend die derart zueinander positionierten Bänder aneinander gewalzt und miteinander und daran anschließend das derart erzeugte dritte Band zu einer Rolle aufgewickelt wird.

Durch das Umlenken mit Hilfe von Umlenkwalzen ist es möglich, die Spulen auch zueinander beabstandet zu lagern und abzuspulen.

Der Erfindung liegt die überraschende Erkenntnis zugrunde, dass eine aneinander anliegende Verzahnung über die Breite des bandförmigen Verbinders auf einfache und kostengünstige Weise erzeugt werden kann und eine erhebliche Verbesserung der mechanischen Stabilität der Verbindung der beiden metallischen Materialien bewirkt, die einer Trennung des bandförmigen Verbinders an der Verbindungsfläche entgegenwirkt. Durch das Walzplattieren der Materialien fließt das duktilere metallische Material in die Verzahnung des weniger duktilen metallischen Materials, so dass eine ineinandergreifende Verzahnung der beiden metallischen Materialien entsteht, die nicht oder nur mit großem Kraftaufwand zu trennen ist. Insbesondere, wenn die Verzahnungen ineinandergreifende Hinterschneidungen in Richtung der Länge des bandförmigen Verbinders aufweisen, ist der bandförmige Verbinder gegenüber einem Auseinanderreißen der beiden metallischen Materialien bei einem Zug entlang der Länge des bandförmigen Verbinders sehr robust.

Eine genaue Passung der Verbindungsstellen ist aufgrund einer Umformung beim Walzplattieren nicht mehr notwendig. Der Druck der Walzen wird auf beiden Seiten gleichmäßig erfolgen und daher ein gleichmäßigerer Druck zum Walzplattieren erzeugt, als wenn nur eine bezüglich der Breite des bandförmigen Verbinders symmetrische Verbindungsfläche hergestellt würde.

Im Folgenden werden Ausführungsbeispiele der Erfindung anhand von elf schematisch dargestellten Figuren und einem Ablaufdiagramm erläutert, ohne jedoch dabei die Erfindung zu beschränken. Dabei zeigt:
Figur 1: eine schematische perspektivische Ansicht eines gezahnten Bands und eines ungezahnten Bands aus metallischen Materialien als Ausgangsprodukte zur Herstellung eines Verbindungsbands und eines erfindungsgemäßen bandförmigen Verbinders mit erfindungsgemäßen Verfahren;
Figur 2: eine vergrößerte Detailansicht des gezahnten Bands nach Figur 1;
Figur 3: eine schematische perspektivische Ansicht eines gezahnten Bands aus einem metallischen Material zur Herstellung eines erfindungsgemäßen bandförmigen Verbinders mit einem erfindungsgemäßen Verfahren;
Figur 4: eine vergrößerte Detailansicht des gezahnten Bands nach Figur 4;
Figur 5: eine schematische Aufsicht auf ein Verbindungs-Band als Zwischenprodukt zur Herstellung eines erfindungsgemäßen bandförmigen Verbinders mit einem erfindungsgemäßen Verfahren;
Figur 6: eine schematische perspektivische Ansicht auf das Verbindungs-Band nach Figur 5;
Figur 7: eine schematische Querschnittansicht durch das Verbindungs-Band nach den Figuren 5 und 6;
Figur 8: eine schematische Aufsicht auf einen erfindungsgemäßen bandförmigen Verbinder hergestellt mit einem erfindungsgemäßen Verfahren;
Figur 9: eine schematische Querschnittansicht durch den bandförmigen Verbinder nach Figur 8;
Figur 10: eine schematische perspektivische Ansicht eines gezahnten Bands aus einem metallischen Material zur Herstellung eines erfindungsgemäßen bandförmigen Verbinders mit einem erfindungsgemäßen Verfahren;
Figur 11: eine vergrößerte Detailansicht des gezahnten Bands nach Figur 10; und
Figur 12: ein Ablaufdiagramm zur Veranschaulichung eines erfindungsgemäßen Verfahrens.

In den Figuren werden teilweise für gleiche oder gleichartige Teile die gleichen Bezugszeichen verwendet.

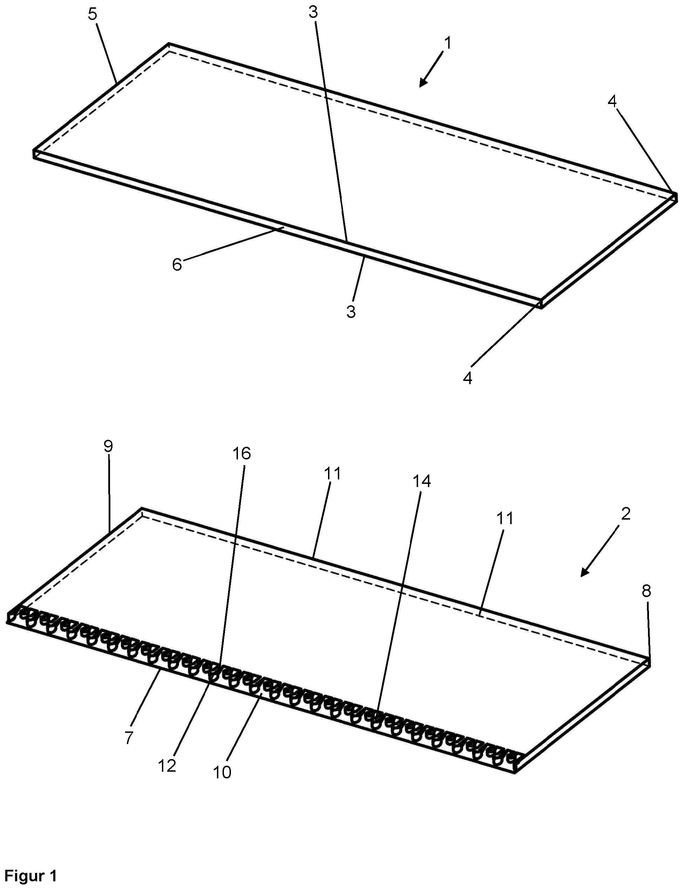

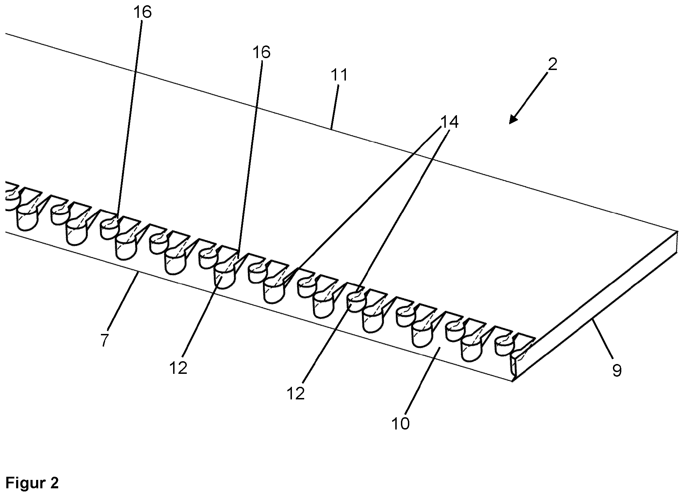

Figur 1 zeigt eine schematische perspektivische Ansicht eines gezahnten Bands 2 und eines ungezahnten Bands 1 aus metallischen Materialien als Ausgangsprodukte zur Herstellung eines Verbindungs-Bands und eines erfindungsgemäßen bandförmigen Verbinders mit erfindungsgemäßen Verfahren und Figur 2 zeigt eine vergrößerte Detailansicht des gezahnten Bands 2. Das ungezahnte Band 1 besteht aus einem duktileren metallischen Material als das gezahnte Band 2. Beispielsweise kann das ungezahnte Band 1 aus Kupfer oder einer Kupfer-Basislegierung bestehen und das gezahnte Band 2 aus Aluminium oder einer Aluminium-Basislegierung bestehen. Das ungezahnte Band 1 kann die Form eines Quaders, Parallelepipeds oder Rhomboeders aufweisen.

Das ungezahnte Band 1 kann vier lange Kanten 3 in Richtung der Länge des ungezahnten Bands 1, vier dicke Kanten 4 in Richtung der Dicke des ungezahnten Bands 1 und vier breite Kanten 5 in Richtung der Breite des ungezahnten Bands 1 aufweisen. Eine vordere Fläche 6, die durch zwei lange Kanten 3 und zwei dicke Kanten 4 begrenzt ist, ist bei dem ungezahnten Band 1 im Gegensatz zum gezahnten Band 2 eben und nicht gezahnt.

Das gezahnte Band 2 kann eine vordere lange Kante 7 und zwei hintere lange Kanten 11 in Richtung der Länge des gezahnten Bands 2, zwei dicke Kanten 8 in Richtung der Dicke des gezahnten Bands 2 und vier breite Kanten 9 in Richtung der Breite des gezahnten Bands 2 aufweisen. Eine vordere abgeschrägte Fläche 10, die durch eine lange Kante 7 begrenzt ist, ist bei dem gezahnten Band 2 im Gegensatz zum ungezahnten Band 1 mit einer Verzahnung 12 versehen. Das gezahnte Band 2 kann bis auf eine Verzahnung 12 die Form eines Quaders, Parallelepipeds oder Rhomboeders aufweisen. Vor dem Herstellen der Verzahnung 12 in das verzahnte Band 2 kann das verzahnte Band 2 aus einem Band aus dem weniger duktilen metallischen Material gefertigt werden, das die gleiche geometrische Form hat, wie das ungezahnte Band 1.

Die Verzahnung 12 kann Hinterschneidungen 14 aufweisen, die in Richtung der beiden gegenüberliegenden hinteren langen Kanten 11 ausgerichtet sind. Diese führen zu einer stabileren mechanischen Verbindung des ungezahnten Bands 1 mit dem gezahnten Band 2, wenn das ungezahnte Band 1 mit dem gezahnten Band 2 über die Verzahnung 12 durch Auflegen des ungezahnten Bands 1 auf den gezahnten Bereich des gezahnten Bands 2 und durch Verbinden des ungezahnten Bands 1 mit dem gezahnten Band 2 durch Walzpressen verbunden ist. Dabei fließt das duktilere metallische Material des ungezahnten Bands 1 in die Zwischenräume der Verzahnung 12 des gezahnten Bands 2. Durch die Hinterschneidungen 14 kann dabei eine besonders zugfeste mechanische Verbindung bei einer Zugkraft in Richtung der Breite des gezahnten Bands 2 und ungezahnten Bands 1 erreicht werden.

Die Verzahnung 12 kann, wie in Figur 1 und 2 gezeigt, nach Art eines Reißverschlusses aufgebaut sein, der sich aus der abgeschrägten Fläche 10 erheben kann. Zähne der Verzahnung 12 können als zylindrische Erhebungen in der Richtung der Dicke des gezahnten Bands 2 in zwei Reihen und zueinander versetzt aus der abgeschrägten Fläche 10 vorstehen. Dabei können die vorstehenden Zylindergrundflächen auf einer Ebene mit der größten oberen Fläche des gezahnten Bands 2 liegen. Die zylindrischen Erhebungen können auf einer den hinteren Kanten 11 zugewandten Seite durch Stege 16 mit dem ungezahnten Bereich des gezahnten Bands 2 verbunden sein.

Die Verzahnung 12 kann durch Fräsen oder durch Prägen eines Bereichs um eine vordere lange Kante 7 eines ungezahnten Bands erzeugt werden.

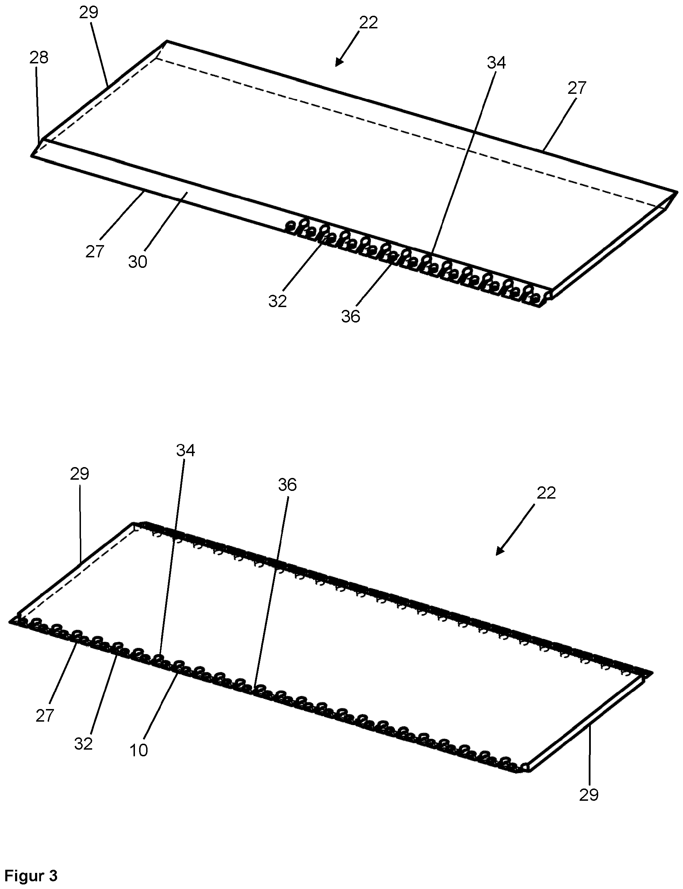

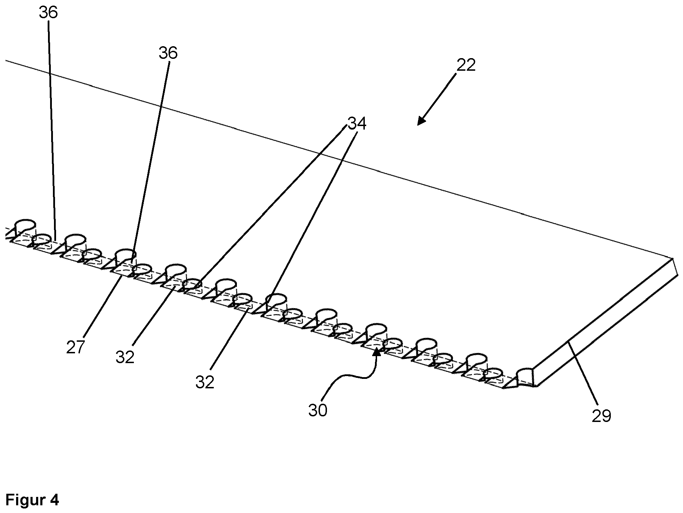

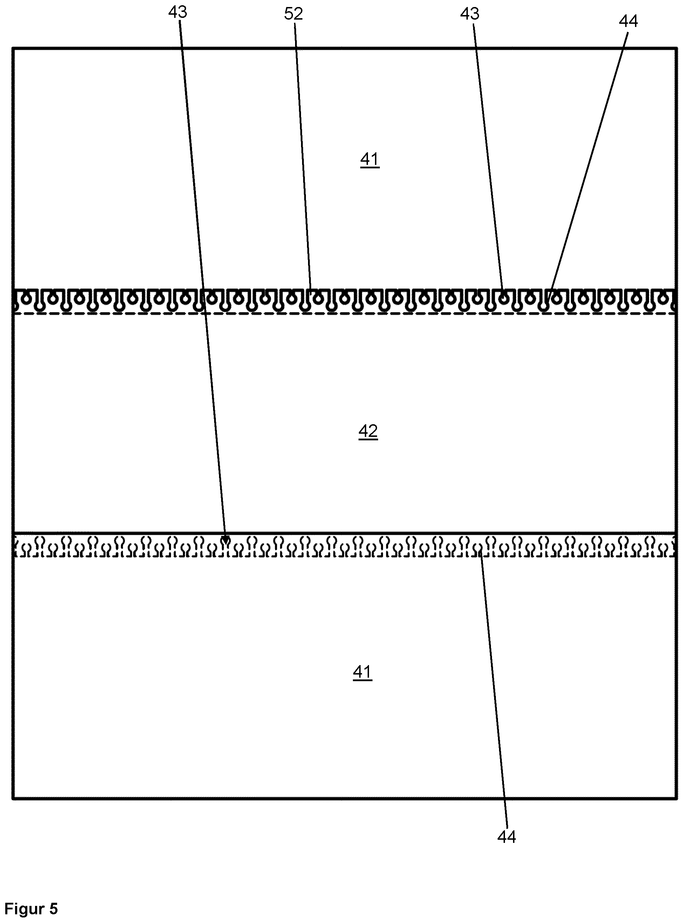

Figur 3 zeigt eine schematische perspektivische Ansicht eines teilweise gezahnten Bands 22 (in Figur 3 oben) und eines beidseitig und vollständig gezahnten Bands 22 (in Figur 3 unten) aus einem metallischen Material zur Herstellung eines Verbindungs-Bands beziehungsweise eines erfindungsgemäßen bandförmigen Verbinders mit einem erfindungsgemäßen Verfahren. Figur 4 zeigt eine vergrößerte Detailansicht des gezahnten Bands 22 nach Figur 4. Das gezahnte Band 22 kann analog zu der Ausführungen nach den Figuren 1 und 2 mit zwei ungezahnten Bändern (nicht gezeigt, aber analog dem ungezahnten Band 1 nach Figur 1) verbunden werden, wobei das gezahnte Band zwischen den zwei ungezahnten Bändern angeordnet wird, so dass Verzahnungen 32, die im Bereich zweier langen Kanten 27 des gezahnten Bands 22 angeordnet sind, von den beiden ungezahnten Bändern überlappt werden. Daraus ergibt sich ein weiteres Verbindungs-Band als Zwischenprodukt zur Herstellung eines erfindungsgemäßen bandförmigen Verbinders, das beispielsweise in den Figuren 5 bis 7 gezeigt ist. Das metallische Material, aus dem die beiden ungezahnten (äußeren) Bänder bestehen wird wieder so gewählt, dass es eine größere Duktilität aufweist als das metallische Material für das gezahnte Band 22. Beispielsweise können die ungezahnten Bänder aus Kupfer oder einer Kupfer-Basislegierung bestehen und das gezahnte Band 22 aus Aluminium oder einer Aluminium-Basislegierung bestehen. Die ungezahnten Bänder können die Form eines Quaders, Parallelepipeds oder Rhomboeders aufweisen.

Das gezahnte Band 22 kann zwei lange Kanten 27 in Richtung der Länge des gezahnten Bands 22 und vier breite Kanten 29 in Richtung der Breite des gezahnten Bands 22 aufweisen. Eine vordere abgeschrägte Fläche 30 und eine hintere abgeschrägte Fläche 30, die durch jeweils eine lange Kante 27 begrenzt ist, sind bei dem gezahnten Band 22 jeweils mit einer Verzahnung 32 versehen. Das gezahnte Band 22 kann bis auf die beiden Verzahnungen 32 die Form eines Quaders, Parallelepipeds oder Rhomboeders aufweisen. Vor dem Herstellen der Verzahnungen 32 in das verzahnte Band 22 kann das verzahnte Band 22 aus einem Band aus dem weniger duktilen metallischen Material gefertigt werden, das die gleiche geometrische Form hat, wie das ungezahnte Band 1 nach Figur 1.

Die Verzahnungen 32 können Hinterschneidungen 34 aufweisen, die in Richtung der jeweils gegenüberliegenden langen Kante 27 ausgerichtet sind. Dies führen zu einer stabileren mechanischen Verbindung der ungezahnten Bänder mit dem gezahnten Band 22, wenn die ungezahnten Bänder mit dem gezahnten Band 22 über die Verzahnungen 32 durch Auflegen der ungezahnten Bänder auf die gezahnten Bereiche des gezahnten Bands 22 und durch Verbinden der ungezahnten Bänder mit dem gezahnten Band 22 durch Walzpressen verbunden werden. Dabei fließt das duktilere metallische Material der ungezahnten Bänder in die Zwischenräume der Verzahnung 32 des gezahnten Bands 22. Durch die Hinterschneidungen 34 kann dabei eine besonders zugfeste mechanische Verbindung bei einer Zugkraft in Richtung der Breite des gezahnten Bands 22 und der ungezahnten Bänder erreicht werden. Die Verzahnungen 32 des gezahnten Bands 22 nach den Figuren 3 und 4 stellt eine Negativform der Verzahnung 12 des gezahnten Bands 2 nach den Figuren 1 und 2 dar und führt beim Verbinden mit den ungezahnten Bändern zu einer formgleichen, aber negativen (umgekehrten) Verbindung. Auch hier wird daher durch den Formschluss und die Hinterschneidungen 34 eine sehr stabile Verbindung zwischen den beiden metallischen Materialien erzeugt.

Die Verzahnungen 32 können, wie in Figur 3 und 4 gezeigt, nach Art eines Reißverschlusses aufgebaut sein, der sich aus der abgeschrägten Fläche 30 erheben kann. Aussparungen der Verzahnung 32 können als zylindrische Aussparungen in der Richtung der Dicke des gezahnten Bands 22 in zwei Reihen und zueinander versetzt in der abgeschrägten Fläche 30 angeordnet sein. Die zylindrischen Aussparungen können dabei durchgehend sein und das restliche Material durch Stege 36 mit dem ungezahnten Teil des gezahnten Bands 22 verbunden sein. Die Verzahnung 32 kann durch Fräsen oder Prägen eines Bereichs um eine lange Kante 7 eines ungezahnten Bands erzeugt werden.

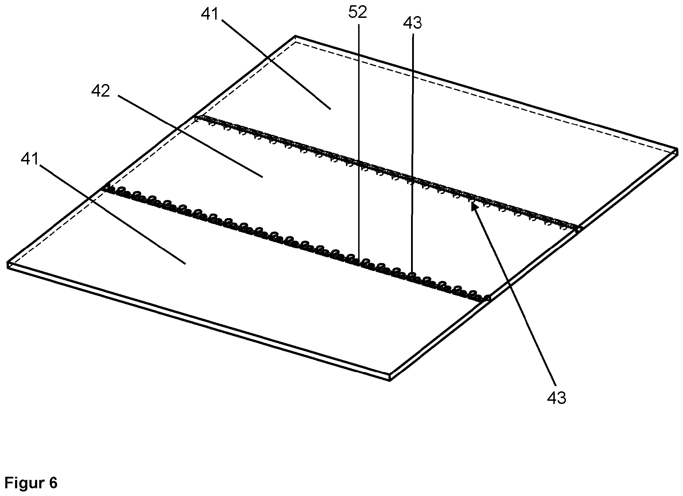

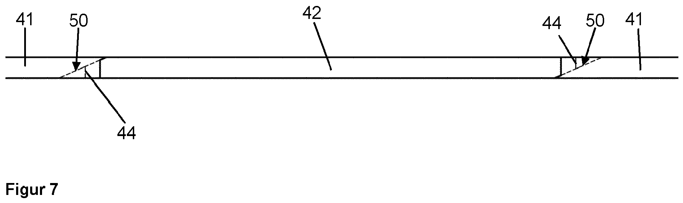

Die Figuren 5 bis 7 zeigen ein Verbindungs-Band als Zwischenprodukt zur Herstellung eines erfindungsgemäßen bandförmigen Verbinders mit einem erfindungsgemäßen Verfahren, wobei Figur 5 eine schematische Aufsicht auf das Verbindungs-Band zeigt, Figur 6 eine schematische perspektivische Ansicht auf das Verbindungs-Band und Figur 7 einen Ausschnitt einer schematischen Querschnittansicht durch das Verbindungs-Band. Das Verbindungs-Band kann beispielsweise hergestellt werden, indem das verzahnte Band 22 nach den Figuren 3 und 4 auf beiden Seiten durch Walzpressen mit zwei ungezahnten Bändern 1 nach Figur 1 und 2 wie oben geschildert verbunden wird.

Das Verbindungs-Band besteht aus einem ersten metallischen Material 41, wie beispielsweise Kupfer oder einer Kupfer-Basis-Legierung, und aus einem zweiten metallischen Material 42, das weniger duktil ist als das erste metallische Material 41. Das zweite metallische Material 41 kann beispielsweise Aluminium oder eine Aluminium-Basis-Legierung sein. Herstellungsbedingt sind das erste metallische Material 41 und das zweite metallische Material 42 über eine Verzahnung 43 des ersten metallischen Materials 41 und eine Verzahnung 52 des zweiten metallischen Materials 42 miteinander verbunden. die Verzahnungen 43, 52 greifen dabei formschlüssig ineinander. Da die Verzahnungen 43, 52 Hinterschneidungen 44 aufweisen, sind die metallischen Materialien 41, 42 mechanisch besonders stabil miteinander verbunden und durch eine Zugkraft nicht voneinander zu trennen, ohne dass das zweite Material zuvor reißt. Als zusätzliche mechanische Stabilisierung ist eine abgeschrägte Verbindungsfläche vorgesehen, die die Grenzfläche zwischen dem ersten metallischen Material 41 und dem zweiten metallischen Material 42 vergrößert und dadurch die Verbindung weiter stabilisiert.

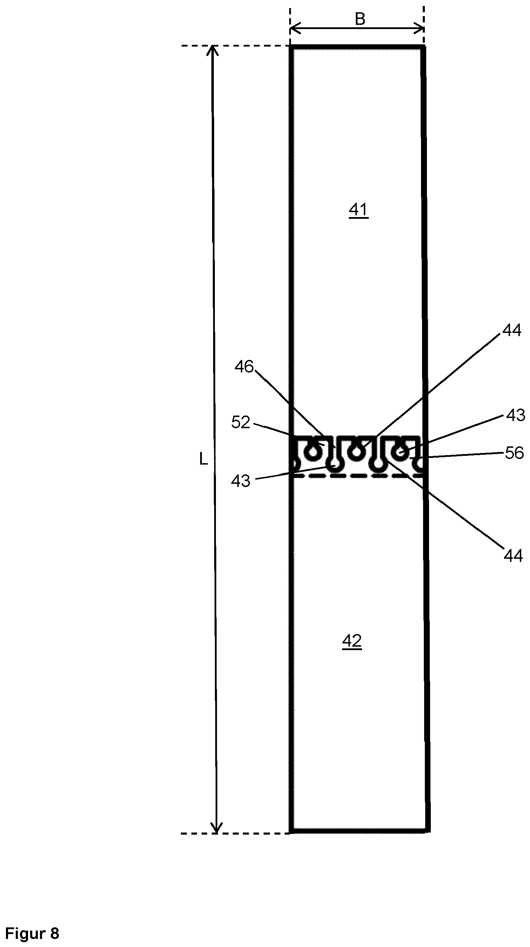

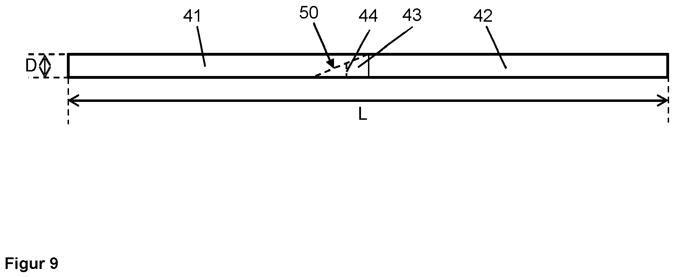

Die Figuren 8 und 9 zeigen schematische Ansichten eines erfindungsgemäßen bandförmigen Verbinders, der mit einem erfindungsgemäßen Verfahren über ein Verbindungs-Band als Zwischenprodukt hergestellt wurde, wie es in den Figuren 5 bis 7 gezeigt ist. Dabei zeigt Figur 8 eine Aufsicht auf den bandförmigen Verbinder und Figur 9 eine Querschnittansicht durch den bandförmigen Verbinder.

Der bandförmige Verbinder kann beispielsweise dadurch hergestellt werden, dass das Verbindungs-Band als Zwischenprodukt nach den Figuren 5 bis 7 in zwei Reihen von parallelen Streifen geschnitten oder gestanzt wird. Bei Bedarf kann der bandförmige Verbinder zusätzlich gebogen werden.

Der bandförmige Verbinder hat eine Länge L, eine Breite B und eine Dicke D, wobei die Dicke D geringer ist als die Länge L und die Breite B. Entlang der Länge L kann der bandförmige Verbinder die zwei unterschiedlichen metallischen Materialien 41, 42 aufweisen, die über deren Verzahnungen 43, 52 miteinander fest gefügt sind. Die Hinterschneidungen 44 bewirken, dass bei einer Zugkraft in Richtung der Länge L des bandförmigen Verbinders, die beiden metallischen Materialien 41, 42 nicht durch die Zugkraft voneinander getrennt werden können, ohne dass das duktilere Material zuvor reißt. Eigene Zug-Versuche zeigen, dass die metallischen Materialien sich eher nicht in dem Bereich der Verzahnungen 43, 52 voneinander trennen, sondern die bandförmigen Verbinder in den Bereichen reißen, in dem die metallischen Materialien 41, 42 nicht ineinandergreifen. Hierbei unterstützen Stege 46, 56 die Kraftaufnahme der ineinandergreifenden zylindrischen Erhebungen und des die zylindrischen Aussparungen umgebenden Materials des ersten metallischen Materials 41 und des zweiten metallischen Materials 42. Auch die abgeschrägte Verbindungsfläche 50 trägt zu der mechanischen Stabilität der Verbindung zwischen dem ersten metallischen Material 41 und dem zweiten metallischen Material 42 bei.

Es kann vorgesehen sein, dass an die freien Enden des bandförmigen Verbinders oder an ein Ende des bandförmigen Verbinders Metallstreifen angelötet oder angeschweißt werden, die jeweils aus dem gleichen oder einem ähnlichen metallischen Material bestehen, wie das metallische Material 41, 42, mit dem sie verbunden werden.

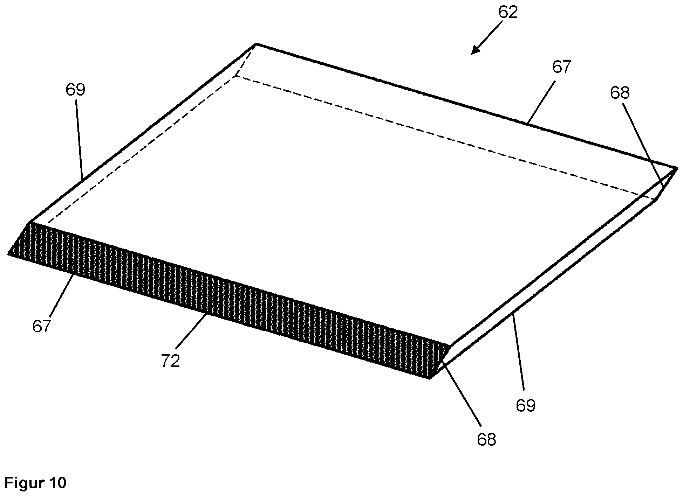

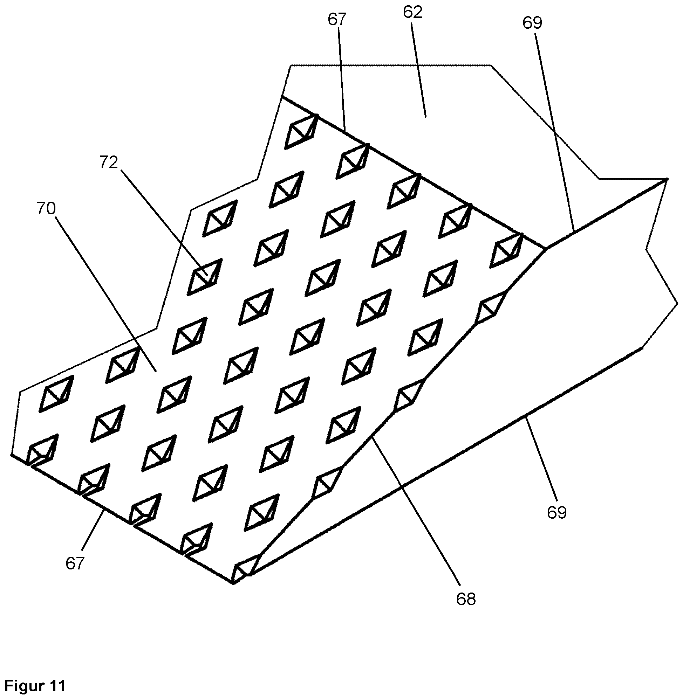

Figur 10 zeigt eine schematische perspektivische Ansicht eines alternativen gezahnten Bands 62 aus einem metallischen Material zur Herstellung eines erfindungsgemäßen bandförmigen Verbinders mit einem erfindungsgemäßen Verfahren und Figur 11 eine vergrößerte Detailansicht des gezahnten Bands 62 nach Figur 10.

Das gezahnte Band 62 kann analog zu der Ausführungen nach den Figuren 1 und 2 oder den Figuren 3 bis 7 mit einem ungezahnten Band oder zwei ungezahnten Bändern (nicht gezeigt, aber analog dem ungezahnten Band 1 nach Figur 1) verbunden werden, wobei das gezahnte Band 62 neben oder zwischen den zwei ungezahnten Bändern angeordnet wird, so dass eine Verzahnung 72, die einer langen Kanten 67 des gezahnten Bands 62 angeordnet ist, von jeweils einem ungezahnten Band überlappt wird. Daraus ergibt sich ein weiteres Verbindungs-Band als Zwischenprodukt zur Herstellung eines erfindungsgemäßen bandförmigen Verbinders, analog dem, das beispielsweise in den Figuren 5 bis 7 gezeigt ist, wobei auch nur zwei Bänder miteinander verbunden werden können, die dann nur noch in Streifen geschnitten oder gestanzt werden müssen, um erfindungsgemäße bandförmige Verbinder zu erzeugen. Das metallische Material, aus dem das oder die ungezahnten Bänder bestehen, wird wieder so gewählt, dass es eine größere Duktilität aufweist als das gezahnte Band 62.

Beispielsweise können die ungezahnten Bänder aus Kupfer oder einer Kupfer-Basislegierung bestehen und das gezahnte Band 62 aus Aluminium oder einer Aluminium-Basislegierung bestehen. Die ungezahnten Bänder können die Form eines Quaders, Parallelepipeds oder Rhomboeders aufweisen.

Das gezahnte Band 62 kann vier lange Kanten 67 in Richtung der Länge des gezahnten Bands 62, vier dicke Kanten 68 in Richtung der Dicke des gezahnten Bands 62 und vier breite Kanten 69 in Richtung der Breite des gezahnten Bands 62 aufweisen. Eine vordere abgeschrägte Fläche 70 und eine hintere abgeschrägte Fläche, die durch jeweils zwei lange Kanten 67 und zwei dicke Kanten 68 begrenzt sind, können bei dem gezahnten Band 62 jeweils mit einer Verzahnung 72 in Form einer Einprägung von pyramidenförmigen Vertiefungen versehen sein oder es kann nur einer der abgeschrägten Flächen 70 mit einer solchen Verzahnung versehen sein, wenn nur ein ungezahntes Band mit dem gezahnten Band 62 verbunden werden soll. Das gezahnte Band 62 kann bis auf die Verzahnung(en) 72 die Form eines Parallelepipeds oder Rhomboeders aufweisen. Vor dem Herstellen der Verzahnungen 72 in das verzahnte Band 62 kann das verzahnte Band 62 aus einem Band aus dem weniger duktilen metallischen Material gefertigt werden, das die gleiche geometrische Form hat, wie das ungezahnte Band 1 nach Figur 1.

Die Verzahnung 72 hat keine Hinterschneidungen, ist dafür aber wesentlich einfacher und kostengünstiger in der Herstellung, da sie einfach durch Prägen der abgeschrägten Fläche 70 hergestellt werden kann. Die Verzahnung 72 führt auch in dieser Form zu einer stabileren mechanischen Verbindung des ungezahnten Bands mit dem gezahnten Band 62 als bei einer Verbindung zweier ungezahnter Bänder, wenn das ungezahnten Band mit dem gezahnten Band 62 über die Verzahnungen 72 durch Auflegen des ungezahnten Band auf die gezahnten Bereiche des gezahnten Bands 62 und durch Verbinden des ungezahnten Bands mit dem gezahnten Band 62 durch Walzpressen verbunden wird. Dabei fließt das duktilere metallische Material des ungezahnten Bands in die Vertiefungen der Verzahnung 72 des gezahnten Bands 62. Durch den Formschluss der Verzahnung 72 mit dem duktileren ungezahnten Band wird eine stabile Verbindung zwischen den beiden Materialien erzeugt.

Die Verzahnung 72 kann durch Prägen eines Bereichs einer abgeschrägten Fläche 70 oder auch einer nicht abgeschrägten Fläche eines ungezahnten Bands erzeugt werden.

Als ein besonders bevorzugtes Ausführungsbeispiel der vorliegenden Erfindung bestehen die beiden ungezahnten Bänder 1 oder das ungezahnte Band 1 aus Kupfer und wird nicht profiliert beziehungsweise umgeformt. Das mittlere Band 2, 22, 42, 62 besteht besonders bevorzugt aus Aluminium und die abgeschrägten Flächen 10, 30, 50, 70 und die Verzahnung(en) 12, 32, 43, 52, 72 wird oder werden in die Aluminiumbänder hinein gefräst, geschnitten, geprägt und/oder geschält. Die geometrischen Größen der unbearbeiteten Kupferbänder können beispielsweise wie folgt gewählt werden: Gesamtbreite 45 mm der Bänder, Dicke der Bänder 3,5 mm. Das Aluminiumband hat vor der Bearbeitung eine Höhe (Dicke) von 4 mm und eine Breite von 114 mm und nach der Bearbeitung einen Winkel der abgeschrägten Flächen zur ebenen Oberseite a = 17°.

Neben den in den vorliegenden Ausführungsbeispielen genannten und bevorzugten metallischen Materialien Kupfer und Kupfer-Basislegierung, kann das erste metallische Material 41 alternativ auch ausgewählt werden aus der Gruppe, die aus Eisen, Eisen-Basislegierung und Stahl besteht. Das zweite metallische Material 42 ist bevorzugt Aluminium oder eine Aluminium-Basislegierung. Theoretisch können aber auch andere metallische Materialien für das erste metallische Material 41 und das zweite metallische Material 42 verwendet werden, wobei das erste metallische Material 41 eine kleinere Bruchdehnung bei Raumtemperatur oder bei Verarbeitungstemperatur aufweist als das zweite metallische Material 42.

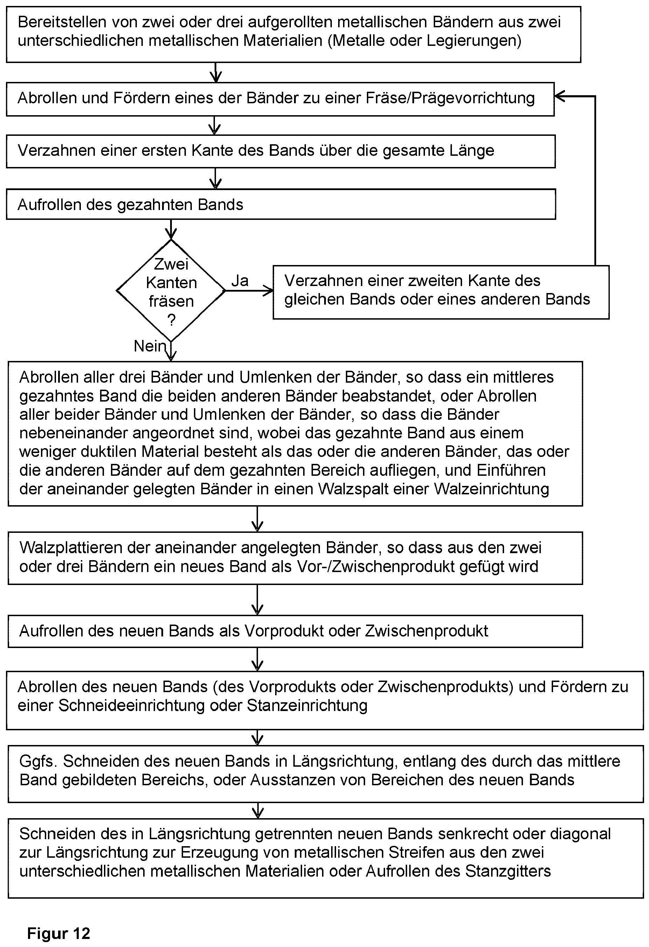

Figur 12 zeigt ein Ablaufdiagramm für ein erfindungsgemäßes Verfahren, bei dem zwei oder drei lange Bänder aus zwei unterschiedlichen metallischen Materialien als Ausgangsmaterialien prozessiert werden, wobei die langen Bänder als aufgerollte Spulen vorliegen. Zunächst werden also zwei oder drei aufgerollte metallische Bänder aus zumindest zwei unterschiedlichen Metallen oder metallischen Legierungen, wie beispielsweise für das erste metallische Material 41 ausgewählt aus der Gruppe, die aus Kupfer, Kupfer-Basislegierung, Eisen, Eisen-Basislegierung und Stahl besteht, und für das zweite metallische Material 42 Aluminium oder eine Aluminium-Basislegierung. Die langen Bänder haben im Ausgangszustand einen, zumindest näherungsweise rechteckigen Querschnitt. Ein Band wird abgespult und eine Ausnehmung an einer Kante gefräst und/oder geprägt, so dass eine Verzahnung an einer langen Kante des Bands entsteht. Das gefräste und/oder geprägte Band wird wieder aufgerollt. Wenn zwei Kanten gefräst werden sollen, kann anschließend ein zweites Band oder das gleiche Band in gleicher Art und Weise gefräst und/oder geprägt werden, so dass entweder zwei Bänder mit je einer Verzahnung vorliegen oder ein Band mit zwei spiegelbildlichen Ausnehmungen.

Theoretisch kann auch nur ein Band ausgefräst werden, indem zunächst nur zwei Bänder bereitgestellt werden, eines davon, das die doppelte Länge des anderen Bands hat, wird ausgefräst, und das Band wird danach in der Mitte der Länge getrennt und als zwei Spulen aufgewickelt. Des Weiteren können theoretisch, wenn nur ein Band gefräst wird, auch beide Ausnehmungen in einem Prozessschritt ausgefräst werden.

Die nicht umgeformten Bänder oder das nicht umgeformte Band wird gemeinsam mit dem gefrästen Band oder den gefrästen Bändern in eine Walzplattier-Maschin eingelegt, in der die Bänder mit gleicher Geschwindigkeit durch eine Walzplattiereinrichtung gefördert und dem Walzspalt in einer gewünschten Positionierung zugeführt werden. Eine verwendbare Walzplattier-Maschine ist beispielsweise in der US 4,798,932 A1 beschrieben.

Anschließend erfolgt ein Abrollen aller Bänder und ein Umlenken der Bänder, so dass ein mittleres Band der drei Bänder die beiden anderen Bänder beabstandet oder die zwei Bänder direkt teilweise überlappend der Walzplattiereinrichtung zugeführt werden. Dabei wird der verzahnte Bereich oder werden die verzahnten Bereiche von einem Band aus einem anderen metallischen Material überlappt. Nach einem Einführen der aneinander gelegten Bänder in den Walzspalt der Walzplattiereinrichtung, werden die Bänder gewalzt und so miteinander verbunden. Die Bänder können dabei mit einem Kaltwalzverfahren, insbesondere durch Walzplattieren, oder mit einem Walzplattierverfahren, bei dem die Bänder geheizt werden, miteinander verbunden. Dabei wird das bei der Verarbeitungstemperatur duktilere metallische Material in die Verzahnung des bei der Verarbeitungstemperatur weniger duktilen metallischen Materials gedrückt, fließt dabei in die Zwischenräume und auf diese Weise wird eine Verzahnung des noch nicht verzahnten Bands oder der noch nicht verzahnten Bänder erzeugt, die in die Verzahnung des bereits zuvor verzahnten Bands greift. Das aus den drei Bändern entstehende neue Band wird anschließend als Spule aufgewickelt. Die beiden metallischen Materialien weisen dadurch eine Verbindung von gegenüberliegenden, formschlüssigen und ineinandergreifenden Verzahnungen auf.

An dieser Stelle ist das erfindungsgemäße Verfahren bezüglich der Herstellung des Verbindungs-Bands als Vorprodukt beziehungsweise Zwischenprodukt zur Herstellung der bandförmigen Verbinder bereits abgeschlossen. Die nächsten drei in Figur 12 gezeigten Schritte erfolgen optional und stellen ein Ausführungsbeispiel für ein erfindungsgemäßes Verfahren zur Herstellung von erfindungsgemäßen bandförmigen Verbindern dar.

Die aufgewickelte Spule des neuen Bands als Vorprodukt wird in einer automatisierten Schneideeinrichtung eingespannt, dort abgerollt und erst in der Mitte in Längsrichtung und anschließend senkrecht oder diagonal dazu geschnitten oder gestanzt, so dass Streifen entstehen, die jeweils zwei, durch Walzplattieren aneinandergefügte metallische Materialien aufweisen. Wenn das Vorprodukt nur aus zwei Bändern gefertigt wurde, muss keine Trennung in Längsrichtung erfolgen und es reicht aus, wenn das Band als Vorprodukt senkrecht oder diagonal zu seiner Längsrichtung geschnitten oder gestanzt wird.

Wenn ein Stanzgitter hergestellt werden soll, wird die aufgewickelte Spule des neuen Bands wird in einer automatisierten Stanzeinrichtung eingespannt, dort abgerollt und die gewünschten Strukturen des Stanzgitters in das neue Band eingestanzt, so dass Stanzgitter entstehen, die jeweils zwei durch Walzplattieren aneinandergefügte metallische Materialien aufweisen.

Alle Verfahrensschritte können vollautomatisiert ablaufen. Das Wechseln der Spulen von einer Vorrichtung in die andere kann auch ohne großen Aufwand manuell erfolgen.

Der Vorteil der so erzeugten metallischen bandförmigen Verbinder aus zwei metallischen Materialien ist darin zu sehen, dass einerseits die Verbindung zwischen den beiden metallischen Materialien sehr stabil ist und gleichzeitig das Herstellungsverfahren nicht zu aufwendig und kostenintensiv ist und sich gleichzeitig in einer Massenfertigung umsetzen lässt. Zumindest eines der Bänder als Ausgangsprodukt muss mit dem erfindungsgemäßen Verfahren nicht verzahnt werden, das heißt nicht vor dem Fügen umgeformt werden. Gleichzeitig muss nicht darauf geachtet werden, dass die geformten Verzahnungen 12, 32, 43, 52, 72 exakt zu einer korrespondierenden Verzahnung passen. Die mit den erfindungsgemäßen Verfahren hergestellten bandförmigen Verbinder sind also noch stabiler bezüglich der Verbindung der metallischen Materialien in der Herstellung als die stabilen Verbindungen, die aus dem Stand der Technik (wie zum Beispiel der US 2011/0 206 943 A1) bekannt sind. Alternativ zum Schneiden von Streifen zur Herstellung der bandförmigen Verbinder kann auch ein Stanzprozess nachgelagert sein, bei dem in gleichen Abständen gleichförmige Bereiche aus dem als Vorprodukt verwendeten Band aus den miteinander verbunden und verzahnten zwei metallischen Materialien ausgestanzt werden und so ein zusammenhängendes Stanzgitter (nicht gezeigt) mit nebeneinander angeordneten gleichförmigen Einheiten erzeugt werden. Das Stanzgitter kann beispielsweise ein zusammenhängendes Substrat zur Massenfertigung von elektronischen Bauelementen oder Baugruppen sein. Dabei wird das Stanzgitter mit einer Vielzahl von elektronischen Bauelementen oder Baugruppen in den vorstrukturierten Einheiten des Stanzgitters bestückt und diese auf dem Stanzgitters befestigt und mit dem Stanzgitter und/oder miteinander elektrisch kontaktiert. Anschließend wird das bestückte Stanzgitter in einzelne Bauteile getrennt. Das Stanzgitter und insbesondere die vorstrukturierten Einheiten des Stanzgitters weisen alle zumindest zwei verschiedene, insbesondere miteinander verbundene Metalle und/oder metallische Legierungen auf.

Die in der voranstehenden Beschreibung, sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Band aus erstem metallischem Material
- 2: Band aus zweitem metallischem Material
- 3: Kante in Richtung der Länge
- 4: Kante in Richtung der Dicke
- 5: Kante in Richtung der Breite
- 6: Fläche Länge mal Dicke
- 7: Kante in Richtung der Länge
- 8: Kante in Richtung der Dicke
- 9: Kante in Richtung der Breite
- 10: Abgeschrägte Fläche
- 11: hintere Kante in Richtung der Länge
- 12: Verzahnung
- 14: Hinterschneidung
- 16: Steg
- 22: Band aus zweitem metallischem Material
- 27: Kante in Richtung der Länge
- 28: Kante in Richtung der Dicke
- 29: Kante in Richtung der Breite
- 30: Abgeschrägte Fläche
- 32: Verzahnung
- 34: Hinterschneidung
- 36: Steg
- 41: Erstes metallisches Material
- 42: Zweites metallisches Material
- 43: Verzahnung
- 44: Hinterschneidung
- 46: Steg
- 50: Abgeschrägte Verbindungsfläche
- 52: Verzahnung
- 56: Steg
- 62: Band aus zweitem metallischen Material
- 67: Kante in Richtung der Länge
- 68: Kante in Richtung der Dicke
- 69: Kante in Richtung der Breite
- 70: Abgeschrägte Fläche
- 72: Verzahnung
- B: Breite
- D: Dicke
- L: Länge

## Patentansprüche

1. Bandförmiger Verbinder aus Metall, der bandförmige Verbinder aufweisend eine Länge (L), eine Breite (B) und eine Dicke (D), wobei die Länge (L) und die Breite (B) des bandförmigen Verbinders größer sind als die Dicke (D) des bandförmigen Verbinders, der bandförmige Verbinder aufweisend ein erstes metallisches Material (41) und ein zweites metallisches Material (42), wobei das erste metallische Material (41) und das zweite metallische Material (42) unmittelbar und formschlüssig über eine Verbindungsfläche (50) miteinander verbunden und aneinander gefügt sind, **dadurch gekennzeichnet, dass**
die Verbindungsfläche (50) zumindest bereichsweise einander gegenüberliegende, formschlüssige und ineinandergreifende Verzahnungen (12, 32, 43, 52, 72) des ersten metallischen Materials (41) und des zweiten metallischen Materials (42) entlang der Breite (B) des bandförmigen Verbinders aufweist.

2. Bandförmiger Verbinder nach Anspruch 1, **dadurch gekennzeichnet, dass**
der bandförmige Verbinder ein bandförmiger elektrischer Verbinder, insbesondere ein bandförmiger elektrischer Verbinder für galvanische Zellen oder ein Batteriezellenverbinder oder ein Akkumulatorzellenverbinder ist, und/oder
die Verzahnungen (12, 32, 43, 52, 72) derart strukturiert sind, dass bei einem Querschnitt durch den bandförmigen Verbinder und durch die Verzahnungen (12, 32, 43, 52, 72) über die gesamte Breite (B) des bandförmigen Verbinders in diesem Querschnitt ein mehrfach wechselndes Verhältnis der Menge des ersten metallischen Materials (41) zu der Menge des zweiten metallischen Materials (42) entlang der Breite (B) des bandförmigen Verbinders über zumindest einen Teilbereich der Dicke (D) des bandförmigen Verbinders vorhanden ist, bevorzugt ein periodisch wechselndes Verhältnis der Menge des ersten metallischen Materials (41) zu der Menge des zweiten metallischen Materials (42) entlang der Breite (B) des bandförmigen Verbinders über zumindest einen Teilbereich der Dicke (D) des bandförmigen Verbinders vorhanden ist.

3. Bandförmiger Verbinder nach einem der vorangehenden Ansprüche, **dadurch gekennzeichnet, dass**
die Verzahnung (43) des ersten metallischen Materials (41) eine Vielzahl von Vorsprüngen des ersten metallischen Materials (41) und die Verzahnung (12, 32, 52, 72) des zweiten metallischen Materials (42) eine Vielzahl von Vorsprüngen des zweiten metallischen Materials (42) aufweist, wobei bevorzugt die Vorsprünge des ersten metallischen Materials (41) in Zwischenräume zwischen den Vorsprüngen des zweiten metallischen Materials (42) greifen, wobei besonders bevorzugt die Vorsprünge Zähne, Zinken, Keile und/oder Haken sind.

4. Bandförmiger Verbinder nach Anspruch 3, **dadurch gekennzeichnet, dass**
die Vorsprünge des ersten metallischen Materials (41) und die Vorsprünge des zweiten metallischen Materials (42) bezogen auf die Breite (B) des bandförmigen Verbinders nebeneinander angeordnet sind oder bezogen auf die Breite (B) des bandförmigen Verbinders in Richtung der Länge (L) des bandförmigen Verbinders versetzt zueinander nebeneinander angeordnet sind, und/oder
die Vorsprünge des ersten metallischen Materials (41) und die Vorsprünge des zweiten metallischen Materials (42) in Richtung der Dicke (D) des bandförmigen Verbinders ausgerichtet sind oder die Vorsprünge des ersten metallischen Materials (41) und die Vorsprünge des zweiten metallischen Materials (42) eine Ausrichtung mit einem Anteil in Richtung der Dicke (D) des bandförmigen Verbinders aufweisen, und/oder
die Vorsprünge des ersten metallischen Materials (41) und die Vorsprünge des zweiten metallischen Materials (42) Hinterschneidungen aufweisen, bevorzugt bezogen auf die Richtung der Länge (L) des bandförmigen Verbinders Hinterschneidungen aufweisen.

5. Bandförmiger Verbinder nach einem der Ansprüche 3 oder 4, **dadurch gekennzeichnet, dass**
die Vorsprünge des ersten metallischen Materials (41) und die Vorsprünge des zweiten metallischen Materials (42) nach Art eines Reißverschlusses ineinandergreifen, und/oder
die Vorsprünge des ersten metallischen Materials (41) und die Vorsprünge des zweiten metallischen Materials (42) Kavitäten bilden, die jeweils Hinterschneidungen aufweisen, wobei die Vorsprünge des ersten metallischen Materials (41) in die Kavitäten und Hinterschneidungen der Vorsprünge des zweiten metallischen Materials (42) greifen und die Vorsprünge des zweiten metallischen Materials (42) in die Kavitäten und Hinterschneidungen der Vorsprünge des ersten metallischen Materials (41) greifen, und/oder
die Vorsprünge des ersten metallischen Materials (41) eine Reihe bilden und die Vorsprünge des zweiten metallischen Materials (42) eine Reihe bilden, bevorzugt die Vorsprünge des ersten metallischen Materials (41) eine gerade Reihe bilden und die Vorsprünge des zweiten metallischen Materials (42) eine gerade Reihe bilden.

6. Bandförmiger Verbinder nach einem der vorangehenden Ansprüche, **dadurch gekennzeichnet, dass**
die Verbindungsfläche (50) über die gesamte Breite (B) des bandförmigen Verbinders eine gegen die Dicke (D) des bandförmigen Verbinders in Richtung der Länge (L) des bandförmigen Verbinders geneigte Oberfläche aufweist, wobei vorzugsweise die Verzahnung (43) des ersten metallischen Materials (41) und die Verzahnung (12, 32, 52, 72) des zweiten metallischen Materials (42) aus der geneigten Oberfläche vorstehen, und/oder
das erste metallische Material (41) aus der Gruppe ausgewählt ist, die aus Kupfer, Kupfer-Basislegierung, Eisen, Eisen-Basislegierung und Stahl besteht, und das zweite metallische Material (42) Aluminium oder eine Aluminium-Basislegierung ist, wobei bevorzugt das erste metallische Material (41) Kupfer oder eine Kupfer-Basislegierung ist.

7. Bandförmiger Verbinder nach einem der vorangehenden Ansprüche, **dadurch gekennzeichnet, dass**
das erste metallische Material (41) und/oder das zweite metallische Material (42) bei Raumtemperatur eine Bruchdehnung von zumindest 10% aufweist, und/oder
das erste metallische Material (41) eine geringere Dehngrenze bei Raumtemperatur aufweist als das zweite metallische Material (42), und/oder
das erste metallische Material (41) und das zweite metallische Material (42) durch Walzen und/oder Pressen miteinander gefügt und verbunden sind.

8. Bandförmiger Verbinder nach einem der vorangehenden Ansprüche, **dadurch gekennzeichnet, dass**
das erste metallische Material (41) einen ersten Längen-Teilbereich der Länge (L) des bandförmigen Verbinders bildet und das zweite metallische Material (42) einen zweiten Längen-Teilbereich der Länge (L) des bandförmigen Verbinders bildet, und/oder
an dem vom zweiten metallischen Material (42) abgewandten Ende des ersten metallischen Materials (41) ein bandförmiges Element aus dem ersten metallischen Material (41) oder aus einem Material, das aus der Gruppe ausgewählt ist, die aus Kupfer, Kupfer-Basislegierung, Eisen, Eisen-Basislegierung und Stahl besteht, befestigt ist, bevorzugt angeschweißt oder angelötet ist.

9. Verwendung eines bandförmigen Verbinders nach einem der vorangehenden Ansprüche zum Verbinden von galvanischen Zellen, insbesondere von Batteriezellen oder Akkumulatorzellen.

10. Galvanisches Element mit mehreren galvanischen Zellen, wobei die galvanischen Zellen mit wenigstens einem bandförmigen Verbinder nach einem der Ansprüche 1 bis 8 verbunden und elektrisch kontaktiert sind.

11. Verfahren zur Herstellung eines Verbindungs-Bands aus zwei metallischen Materialien (41, 42), wobei das Verbindungs-Band zur Herstellung bandförmiger Verbinder geeignet und vorgesehen ist und wobei das Verfahren durch die folgenden, chronologisch aufeinander folgenden Schritte gekennzeichnet ist:
A) Bereitstellen eines ersten Bands (1) aus einem ersten metallischen Material (41) und eines zweiten Bands (2, 22, 62) aus einem anderen, zweiten metallischen Material (42), wobei das erste Band (1) und das zweite Band (2, 22, 62) zumindest vier Kanten, zwei zueinander parallele Flächen und einen zumindest näherungsweise rechteckigen Querschnitt aufweisen,
B) Herstellen einer Verzahnung (12, 32, 52, 72) auf einer Seite des zweiten Bands (2, 22, 62) ausgehend von einer Kante des zweiten Bands (2, 22, 62) oder ausgehend von zwei Kanten des zweiten Bands (2, 22, 62) in zumindest eine der zueinander parallelen Flächen hinein, wobei die Verzahnung (12, 32, 52, 72) über die gesamte zu verbindende Länge des zweiten Bands (2, 22, 62) verläuft,
C) Positionieren des verzahnten zweiten Bands (2, 22, 62) und des ersten Bands (1) zueinander, wobei das erste Band (1) über die Verzahnung (12, 32, 52, 72) des zweiten Bands (2, 22, 62) an das verzahnte zweite Band (2, 22, 62) angelegt wird, so dass das erste Band (1) das verzahnte zweite Band (2, 22, 62) im Bereich der Verzahnung (12, 32, 52, 72) überlappt und das verzahnte zweite Band (2, 22, 62) und das erste Band (1) ansonsten voneinander abstehen, und
D) Verbinden des verzahnten zweiten Bands (2, 22, 62) mit dem ersten Band durch Walzplattieren der aneinander positionierten Bänder (1, 2, 22, 62), nämlich des ersten Bands (1) und des zweiten Bands (2, 22, 62), wobei durch das Walzplattieren ein zusammenhängendes Verbindungs-Band mit zwei parallelen Flächen erzeugt wird.

12. Verfahren nach Anspruch 11, **dadurch gekennzeichnet, dass**
das Verbinden des verzahnten zweiten Bands (2, 22, 62) mit dem ersten Band (1) durch Walzplattieren in Schritt D) bei einer Verarbeitungstemperatur erfolgt und das erste metallische Material (41) und das zweite metallische Material (42) so gewählt sind, dass die Bruchdehnung des ersten metallischen Materials (41) bei der Verarbeitungstemperatur kleiner ist als die Bruchdehnung des zweiten metallischen Materials (42) und/oder dass die Dehngrenze des ersten metallischen Materials (41) bei der Verarbeitungstemperatur kleiner ist als die Dehngrenze des zweiten metallischen Materials (42), und/oder
das Herstellen der Verzahnung (12, 32, 52, 72) in dem zweiten Band (2, 22, 62) mit einer Zerspanungstechnik und/oder durch Prägen erfolgt, bevorzugt durch Fräsen und/oder Prägen.

13. Verfahren nach einem der Ansprüche 11 oder 12, **dadurch gekennzeichnet, dass**
beim Verbinden des verzahnten zweiten Bands (2, 22, 62) und des ersten Bands (1) durch Walzplattieren in Schritt D) das erste Band (1) umgeformt wird oder das verzahnte zweite Band (2, 22, 62) und das erste Band (1) umgeformt werden, wobei vorzugsweise die Höhe des erzeugten Verbindungs-Bands geringer ist als die Höhe des ersten Bands (1) und die Höhe des zweiten Bands (2, 22, 62) und/oder bei der Umformung Wärme zugeführt wird und die Höhe des erzeugten Verbindungs-Bands zumindest um 20% geringer ist als die Höhe des ersten Bands (1) und des zweiten Bands (2, 22, 62), und/oder
die Höhe des ersten Bands (1) und die Höhe des zweiten Bands (2, 22, 62) mindestens 0,5 mm und maximal 5 mm betragen und nach dem Walzplattieren das erzeugte Verbindungs-Band eine Höhe von mindestens 0,1 mm bis maximal 2 mm aufweist, wobei vorzugsweise die Höhe des erzeugten Verbindungs-Bands geringer ist als die Höhe des ersten Bands (1) und als die Höhe des zweiten Bands (2, 22, 62) und/oder
das erste Band (1) und das zweite Band (2, 22, 62) eine Breite von mindestens 10 mm und maximal 100 mm aufweisen.

14. Verfahren nach einem der Ansprüche 11 bis 13, **dadurch gekennzeichnet, dass**
beim Herstellen der Verzahnung (12, 32, 52, 72) in Schritt B) das zweite Band (2, 22, 62) zunächst als nicht profiliertes zweites Band (2, 22, 62) von einer Rolle abgespult wird, die Verzahnung (12, 32, 52, 72) durch ein subtraktives Verfahren und/oder durch Prägen erzeugt wird, bevorzugt mit einer Zerspanungstechnik oder einer Frästechnik oder durch Prägen erzeugt wird, und das verzahnte zweite Band (2, 22, 62) anschließend wieder zu einer Rolle aufgewickelt wird und/oder
beim Herstellen der Verzahnung (12, 32, 52, 72) in Schritt B) auch ein Herstellen einer Verzahnung (43) auf einer Seite des ersten Bands (1) ausgehend von einer Kante des ersten Bands (1) oder ausgehend von zwei Kanten des ersten Bands (1) in zumindest eine der zueinander parallelen Flächen hinein erfolgt, wobei die Verzahnung (43) über die gesamte zu verbindende Länge des ersten Bands (1) verläuft, und in Schritt C) ein Positionieren des verzahnten ersten Bands (1) und des verzahnten zweiten Bands (2, 22, 62) derart zueinander erfolgt, dass die Verzahnung (43) des ersten Bands (1) und die Verzahnung (12, 32, 52, 72) des zweiten Bands (2, 22, 62) aneinander angelegt werden.

15. Verfahren zur Herstellung eines bandförmigen Verbinders aus einem Verbindungs-Band aus Metall, das mit einem Verfahren nach einem der Ansprüche 11 bis 14 hergestellt wird, wobei das Verbindungs-Band senkrecht zu einer Längsachse des Verbindungs-Bands in Streifen geschnitten oder gestanzt wird, wobei vorzugsweise mit dem Verfahren ein bandförmiger Verbinder nach einem der Ansprüche 1 bis 10 hergestellt wird.
